# EUROPEAN PATENT SPECIFICATION

(11) **EP 0 387 813 B1**
(45) Date of publication and mention of the grant of the patent: **25.06.1997**
(21) Application number: 90104759.7
(22) Date of filing: 13.03.1990
(51) Int. Cl.: G11B 5/035, G11B 20/10

(54) **Automatic equalizer**
Automatischer Entzerrer
Egalisateur automatique

(30) Priority: 13.03.1989 JP 60416/89; 13.09.1989 JP 237492/89; 19.09.1989 JP 240729/89
(43) Date of publication of application: 19.09.1990
(73) Proprietor: SONY CORPORATION, Tokyo 141 (JP)
(72) Inventor: Tanaka, Masato, Shinagawa-ku, Tokyo (JP); Kan, Toshiya, Shinagawa-ku, Tokyo (JP)
(74) Representative: Müller, Frithjof E., Dipl.-Ing.

(56) References cited:
- EP-A- 0 147 550
- EP-A- 0 332 079
- PATENT ABSTRACTS OF JAPAN vol. 12, no. 456 (P-793)(3303) 30 November 1988, & JP-A-63 177363 (MATSUSHITA ELECTRIC IND CO LTD) 21 July 1988,
- IEEE TRANSACTIONS ON MAGNETICS. vol. MAG23, no. 5, September 1987, NEW YORK US & al.: "Automatic equalizer for digital magnetic recording systems"
- IEEE TRANSACTIONS ON COMMUNICATIONS. vol. COM33, no. 10, October 1985, NEW YORK US & al.: "Design of automatic equalizer including a decoder of error-correcting code"
- SMPTE JOURNAL. vol. 96, no. 10, October 1987, US && al.: "Rotating digital audio tape (R-DAT): a format overview"

## Description

This invention relates to an equalizer according to the preamble part of claim 1 employed in, for example, a recording and/or reproducing apparatus or a transmission channel for a communication system. More particularly, it relates to an automatic equalizer as disclosed for example in JP-A-63-177 363, according to which claim 1 has been put in the two-part form, and in an article by S. Mita et al in I.E.E.E. Transactions on Magnetics, Vol. MAG-23, No. 5, Sept. 1987, p. 3672 to 3674, in which parameters may be automatically set to optimum values.

In general, in a recording and/or reproducing apparatus or transmission channel for a communication system, an equalizer for affording equalizer characteristics suited to its transmission characteristics to transmission analog or digital signals or data, is employed for diminishing distortion of transmission analog signals or errors in transmission digital data. In a magnetic recording and/or reproducing apparatus, such as an audio or video tape recorder, an equalizer for affording high-range enhancing characteristics to playback signals by a reproducing magnetic head is provided in the reproducing system for elevating the recording density of the magnetic tape in the recording system.

Conventionally, the properties of the equalizer are adjusted to and fixed at the time of shipment.

As for as rotational magnetic head type video tape recorders or digital audio tape recorders are concerned, there is known a system using recording neighbouring tracks at different recording azimuth, without providing a guard band, or a so-called inclined azimuth recording, for realizing a high recording density. In a video tape recorder or a digital audio tape recorder employing such an inclined azimuth recording system, tracking servo is usually applied for signal reproduction. There is, however, also known a signal reproducing apparatus in which signal reproduction is performed without tracking servo control (see JP-A-59-177712).

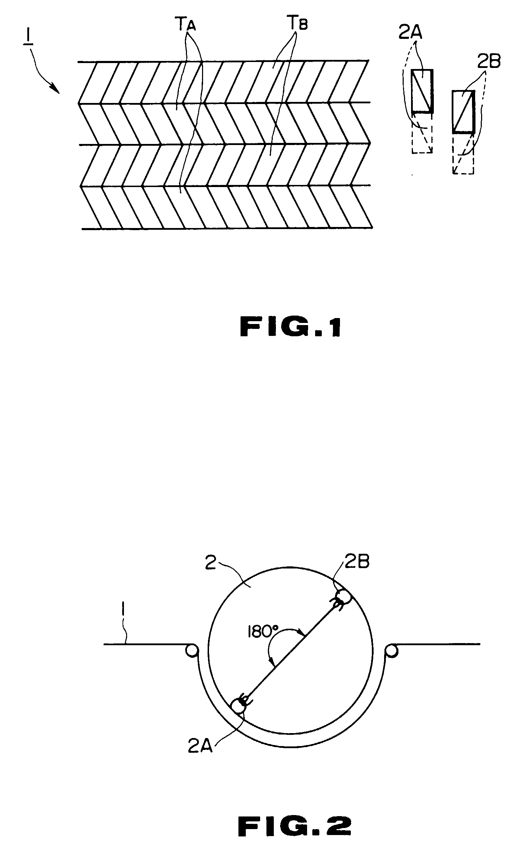

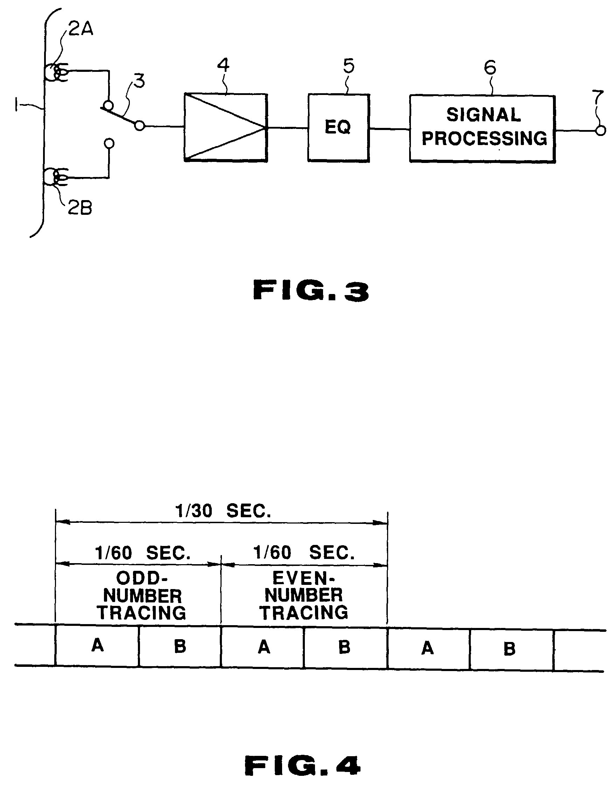

With such a signal reproducing apparatus, first and second inclined tracks TR_{A}, TR_{B} are alternately formed at different recording azimuth angles on a magnetic tape 1. For reproducing these tracks, a rotational magnetic head device as shown in Fig. 1 is employed, in which first and second playback rotational magnetic heads 2A, 2B having azimuth angles corresponding to the recording azimuth are mounted at an angular interval of 180° on a tape guide drum 2. Each track of the magnetic tape 1 placed on the tape guide drum 2 over an angular extent of 180° is alternately traced a plural number of times, such as twice, by the first and second playback rotational magnetic heads 2A, 2B. The playback signals obtained by the playback rotational magnetic heads 2A, 2B are supplied, as shown in Fig. 3, from a head changeover switch 3 via playback amplifier 4 and an equalizer 5 to a signal processing unit 6. The reproduced signals shown in Fig. 4 are produced at an angular interval of 180° from the magnetic heads 2A, 2B by head changeover by the head changeover switch 3 so as to be processed by the signal processing unit 6 to form correct playback signals which are output at a signal output terminal 7.

In a magnetic recording and/or reproducing apparatus, the frequency characteristics of the playback system are influenced by various factors, such as fluctuations in the magnetic recording media or magnetic heads, changes in temperature or humidity, or temporal changes.

Hence, sufficient operational reliability cannot be obtained with the use of a conventional equalizer with fixed equalizer characteristics. On the other hand, adjustment with an allowance in the equalizer characteristics to take account of fluctuations in the playback system results in a lowering of the recording density corresponding to such preset allowance.

On the other hand, with a signal reproducing apparatus in which signal reproduction is performed without servo tracking , each track on the magnetic tape is traced alternately by the first and second playback magnetic heads 2A, 2B for a complete tracing, so that the track-tracing relation is such that each track corresponds to two tracings. In other words, the track-tracing relation is the same for every other head tracing but differs for two consecutive head tracings.

Hence, in the reproducing apparatus in which signal reproduction is performed without tracking control, the equalizing characteristics for odd-numbered tracings need to be measured and set independently from those for even-numbered tracings and, for implementing such function of equalization, the overall system becomes rather complicated.

It is an object of the present invention to provide an improved automatic equalizer in which the characteristic parameters can be efficiently and reliably converged into optimum values to afford optimum equalizer characteristics to the input signal.

It is a further object of the present invention to provide a signal reproducing apparatus adapted to reproduce signals without tracking, wherein automatic setting of equalizing characteristics can be realized by a simplified arrangement.

It is a further object of the present invention to provide a signal reproducing apparatus having an automatic equalizing function of efficiently extracting changes caused in the degree of the effect of the characteristic parameters of the equalizer between odd-number tracing and even-number tracing.

The above and other objects as well as novel features of the present invention will become apparent upon reading the following description in conjunction with the accompanying drawings and the novel matter pointed out in the claims.

### BRIEF DESCRIPTION OF THE DRAWINGS

Fig. 1 shows the relation between the recording track and the reproducing magnetic head in the digital audio tape recorder of an inclined azimuth recording system.

Fig. 2 is a diagrammatic plan view showing the construction of a rotational magnetic head device employed in digital audio tape recorders.

Fig. 3 is a block diagram showing the construction of a conventional digital audio tape recorder.

Fig. 4 shows reproduced output signals from the reproducing magnetic heads in the conventional digital audio tape recorder of Fig. 3.

Fig. 5 is a block diagram showing a first embodiment of an automatic equalizer according to the present invention.

Fig. 6 is a block diagram showing an embodiment of an equalizer employed.

Fig. 7 illustrates the state of change of the equalizer parameters with the aid of a coordinate system.

Fig. 8 illustrates characteristic parameters for elucidating the problems inherent in the automatic equalizer with the aid of a two-dimensional coordinate system.

Fig. 9 is a block diagram showing a second embodiment of an automatic equalizer of the present invention when applied to a digital audio tape recorder.

Fig. 10 illustrates characteristic parameters for elucidating the operation of the initial parameter setting unit of the automatic equalizer.

Fig. 11 is a flowchart for elucidating the operation of the automatic equalizer.

Fig. 12 is a block diagram showing a functional example of the characteristic parameter control unit of the automatic equalizer.

Fig. 13 illustrates characteristic parameters for elucidating the control operation by the characteristic parameter control unit with the aid of a two-dimensional coordinate system.

Fig. 14 is a block diagram showing the construction of a reproducing system of a digital audio tape recorder to which the present invention is applied.

Fig. 15 illustrates characteristic parameters for illustrating the operation of the automatic equalizer used in the reproducing system shown in Fig. 14 with the aid of the two-dimensional coordinate system.

### EMBODIMENTS

Referring to the drawings, certain preferred embodiments of the present invention will be explained in detail.

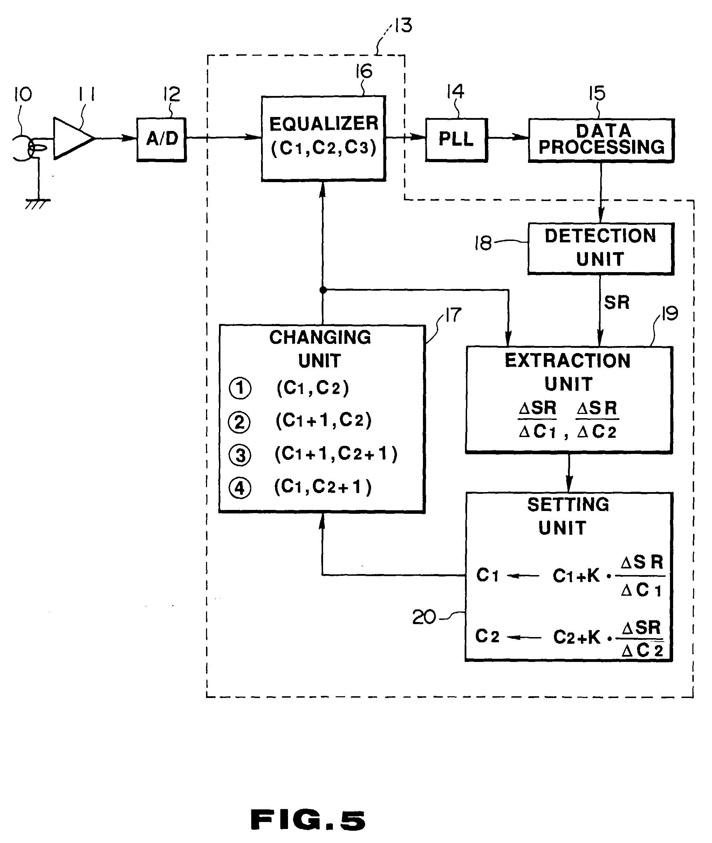

Fig. 5 shows an application of the automatic equalizer of the present invention to a transmission circuit or channel of a reproducing system of a signal recording and/or reproducing apparatus.

In Fig. 5, playback RF signals, reproduced from a magnetic recording medium by a playback head 10, are transmitted via amplifier 11 to an analog-to-digital (A/D) converter 12 where they are converted into digital signals, which are transmitted to an automatic equalizer 13. Equalized digital signals are output from the equalizer 13 and transmitted to a data processing circuit 15 by way of a phase locked loop (PLL) circuit 14.

The automatic equalizer 13 is constituted by an equalizer 16, interposed between the A/D converter 12 and the PLL circuit 14, and a changing unit 17, a detection unit 18, an extraction unit 19 and a setting unit 20 for setting parameters for equalizer 16.

The equalizer 16 is a FIR type digital filter having its characteristics controlled by three parameters C₁, C₂ and C₃, and affords equalizing characteristics consistent with the parameters C₁, C₂ and C₃ to digital signals supplied from the A/D converter 12 to transmit the resulting signals to the PLL circuit 14.

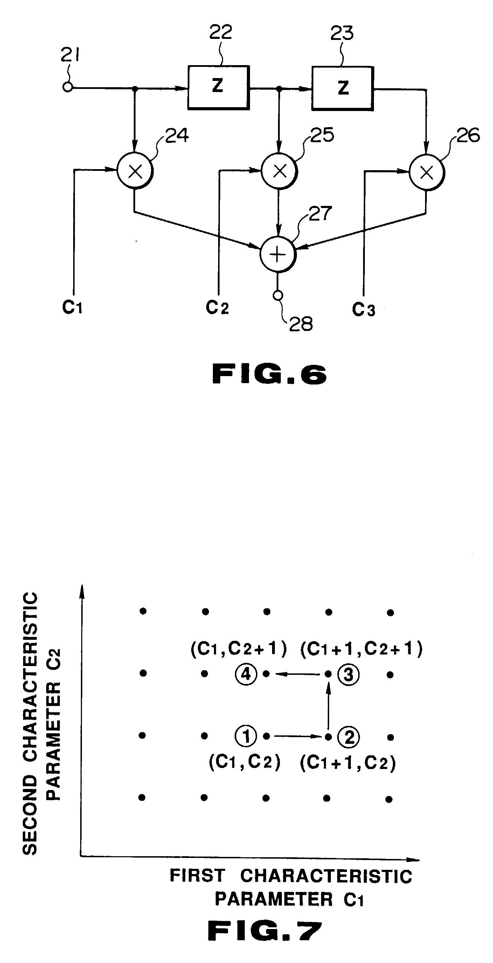

The equalizer 16 may be arranged as shown in Fig. 6, wherein a digital signal supplied to input terminal 21 is supplied to a first multiplier 24, while being supplied via delay elements 22, 23 to second and third multipliers 25, 26, respectively, and wherein the signals are weighted in accordance with the parameters C₁, C₂ and C₃ in these multipliers 24, 25 and 26 and summed at a summing point 27 before being output at an output terminal 28.

With the above described automatic equalizer 13, of the parameters C₁, C₂ and C₃, determining the characteristics of the equalizer 16, the parameter C₃ is always fixed at a predetermined level, whereas the parameters C₁ and C₂ are variable. These parameters C₁ and C₂ are changed in dependence upon the outputs from the changing unit 17.

The changing unit 17 acts for changing the parameters C₁ and C₂, set in the setting unit 20, as will be explained subsequently, within a predetermined small extent, at a predetermined short interval of time, with the thus changed parameters being supplied as the parameters C₁ and C₂ of the equalizer 16. For changing the parameters C₁ and C₂ in this manner, a parameter (C₁, C₂) set by the setting unit 20, hereinafter referred to as value (i) is changed to (C₁+1, C₂), hereinafter referred to as value (ii), then to (C₁+1, C₂+1), hereinafter referred to as value (iii) and then to (C₁, C₂+1), hereinafter referred to as value (iv), as shown by a coordinate system in Fig. 7. The parameters are repeatedly cycled in the range of the values (i) to (iv) in a manner of orthogonal oscillation by a predetermined amount around the value (i) for utmost effect in high speed operation.

When supplied with the values (i) to (iv) as the parameters C₁ and C₂, the equalizer 16 performs a corresponding equalizing operation on the digital signal before transmitting the signal via PLL circuit 14 to the data processing circuit 15. A portion of the digital signal, transmitted to the data processing circuit 15, is retransmitted to the detection unit 18 of the automatic equalizer 13.

The detection unit 18 detects the error rate of the digital signal from the data processing circuit 15 to form a data SR indicating the detected error rate, which data SR is transmitted to the extraction unit 19.

The extraction unit 19 is supplied with the data indicating the values (i) to (iv) from the changing unit 17 and fetches the error rate data SR for the values (i) to (iv) to detect the error rates SR(i) to SR(iv) for the values (i) to (iv). From these results, the ratio of change of the error rate to the variance in the parameter C₁ or ΔSR/ΔC₁ is extracted by an equation$\frac{\text{ΔSR}}{{\text{ΔC}}_{\text{1}}} \text{=} \frac{\text{(SR(ii) + SR(iii) - (SR(i) + SR(iv)}}{\text{2}}$ while the ratio of change of the error rate to the variance of the parameter C₂ or ΔSR/ΔC₂ is extracted by an equation$\frac{\text{ΔSR}}{{\text{ΔC}}_{\text{2}}} \text{=} \frac{\text{(SR(iii) + SR(iv) - (SR(i) + SR(ii))}}{\text{2}}$

The data indicating these change ratios are supplied to the setting unit 20, which adds a correction value K·ΔSR/ ΔC₁ to the preceding value C₁ in accordance with an equation${\text{C}}_{\text{1}} {\text{= C}}_{\text{1}} \text{+ K ·} \frac{\text{ΔSR}}{{\text{ΔC}}_{\text{1}}}$ where K is a constant of proportionality, to compute a new value of the parameter C₁ for the equalizer 16 so as to diminish the error rate, while adding a correction value K·ΔSR/ΔC₂ to the preceding value C₂ in accordance with an equation${\text{C}}_{\text{2}} {\text{= C}}_{\text{2}} \text{+ K ·} \frac{\text{ΔSR}}{{\text{ΔC}}_{\text{2}}}$ where K is a constant of proportionality, to compute a new value of the parameter C₂ for the equalizer 16 so as to diminish the error rate. The operation of computing new values for the parameters C₁ and C₂ need not be linear but may also be non-linear, on the condition that satisfactory characteristic may thereby be produced.

The new values of the parameters C₁ and C₂ thus set are applied to the changing unit 17 which change these new parameter C₁ and C₂ as described above to transmit the thus changed values to the equalizer 16.

The above sequence of operations is repeated by the above units 16 to 20 in the automatic equalizer 13 to change the parameters C₁ and C₂ of the equalizer 16 automatically for reducing the output error rate of the equalizer 16. Ultimately, automatic setting is so made as to minimize the error rate, that is to optimize the parameters C₁ and C₂ for the equalizer 16.

In addition, since the parameters C₁ and C₂ of the equalizer 16 of the automatic equalizer 13 are set in accordance with the extent of change of the error rate, as described above, the automatic equalizer may be implemented with a simple circuit organization, so that the system may be reduced in size and costs. Moreover, since the parameters C₁ and C₂ of the equalizer 16 can be computed by a simplified operation, optimum values of the parameters may be found by convergence at a higher speed.

Although the automatic equalizer 16 operating on a digital signal has been explained in the foregoing, an automatic equalizer operating on an analog signal may also be implemented by detecting the error rate of the output of an analog equalizer by, for example, digital signal processing.

With the above described first embodiment of the present invention, the equalizer parameters may be automatically set to optimum values so as to follow fluctuations in characteristics caused by changes in the environment and to automatically cope with temporal changes in the circuitry as well as fluctuations or changes in the recording medium. In this manner, with the use of the above described automatic equalizer 16, a system can be implemented which is excellent both in interchangeability and in operational reliability.

The equalizer parameters are set as a function of the degree of changes in the error rate, so that the circuit construction may be simplified to reduce the size and costs of the system.

Moreover, the equalizer parameters can be computed by a simplified operation, so that convergence to optimum values of the parameters may be achieved within a shorter period of time.

Above all, the optimum parameters may be set at an elevated speed by employing the parameter changing method of orthogonally oscillating the parameters.

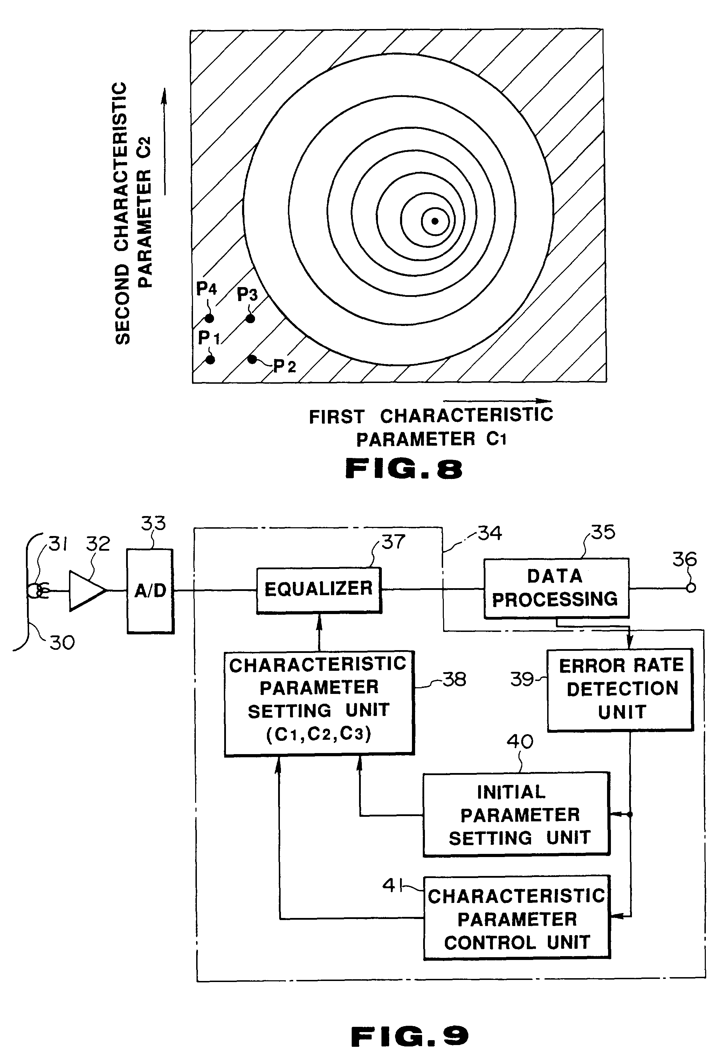

However, with the above described first embodiment of the automatic equalizer 16, prolonged convergence time is necessitated when the initial value of the equalizer parameter is markedly different from the convergence value. On the other hand, assuming that, in a multidimensional space that can be occupied by the values of the characteristic parameters, a spatial area exists in which the signal error rate of the equalizer output is constant, that is, the change in the signal error rate is zero, and that the above mentioned minute change area of the characteristic parameters is included in the spatial area, it becomes impossible to converge the characteristic parameters to an optimum value. For example, as shown in Fig. 8, showing the signal error rate of the equalizer output by contour lines, when a region with a constant signal error rate of the equalizer output "1" exists, as shown by hatched lines therein, in a two-dimensional plane that can be occupied by the equalizer characteristic parameters C₁ and C₂, the above mentioned characteristic values cannot be controlled in a direction of approaching towards an optimum value even when the signal error rate is detected at each of measurement points P₁, P₂, P₃ and P₄ in the above region with changed characteristic parameters, since the change in the signal error rate is unexceptionally "0".

With the automatic equalizer with variable characteristic parameters, initial parameters are afforded by initial parameter setting means to variably control the characteristic parameters by characteristic parameter control means.

For each of the measurement points, corresponding to a plurality of previously set characteristic values, the above mentioned parameter setting means sequentially detects the signal error rate of the equalizer output by error rate detection means to find a minimum error rate measurement point to afford the characteristic parameters of the thus found measurement point to the equalizer as the initial parameters.

The characteristic parameter control means repeatedly performs a control operation of changing characteristic parameters of the equalizer within a predetermined range and variably controlling, on the basis of the degree of change of the signal error rate of the equalizer output detected by the error rate detection means, the equalizer characteristic parameters in a direction of diminishing the signal error rate.

Fig. 9 shows, in a block diagram, the organization of a playback system of a digital audio tape recorder employing an automatic equalizer according to a second embodiment of the present invention.

The playback system shown in Fig. 9 is provided with a magnetic head 31 for reproducing digital audio data recorded on a magnetic tape 30. The playback signal reproduced by the magnetic head 31 from the magnetic tape 30 is supplied to an analog to digital (A/D) converter 33 by way of a playback amplifier 32. The A/D converter 33 converts the playback signal into binary values and thereby into a corresponding digital signal. The digital signal obtained by the A/D converter 33 is supplied by way of an equalizer 37 to a data processing unit 35 which performs prescribed error correction or decoding operations on the digital signal supplied over the equalizer 37. The data processing unit 35 decodes digital audio data from the digital signal to output decoded data as playback audio data at a signal output terminal 36.

Within the playback system, the equalizer 37 is part of an automatic equalizer 34 and has variable equalizer characteristics by virtue of the three characteristic parameters C₁, C₂ and C₃ supplied from a characteristic parameter setting unit 38.

The equalizer 37 is constructed similarly to the equalizer shown in Fig. 6.

As shown in Fig. 9, the automatic equalizer 34 comprises the equalizer 37 having variable equalizer characteristics by virtue of the three characteristic parameters C₁, C₂ and C₃ supplied from the characteristic parameter setting unit 38, an error rate detection unit 39 for detecting a signal error rate of the output from this equalizer 37, an initial parameter setting unit 40 for affording initial value of the parameter C₁ to C₃ of the equalizer 37, or initial parameters, to the parameter setting unit 38, on the basis of a signal error rate ER detected by the error rate detection unit 39.

With the above described automatic equalizer 34, of the characteristic parameters C₁ to C₃ afforded by the parameter setting unit 38 to the equalizer 37, the third parameter C₃ is always fixed at a predetermined level, while the first and the second parameters C₁ and C₂ are variably set for affording an optimum equalizer output by the equalizer 37.

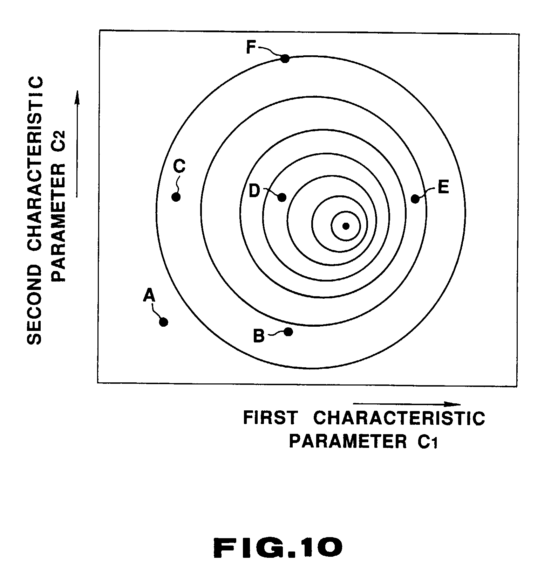

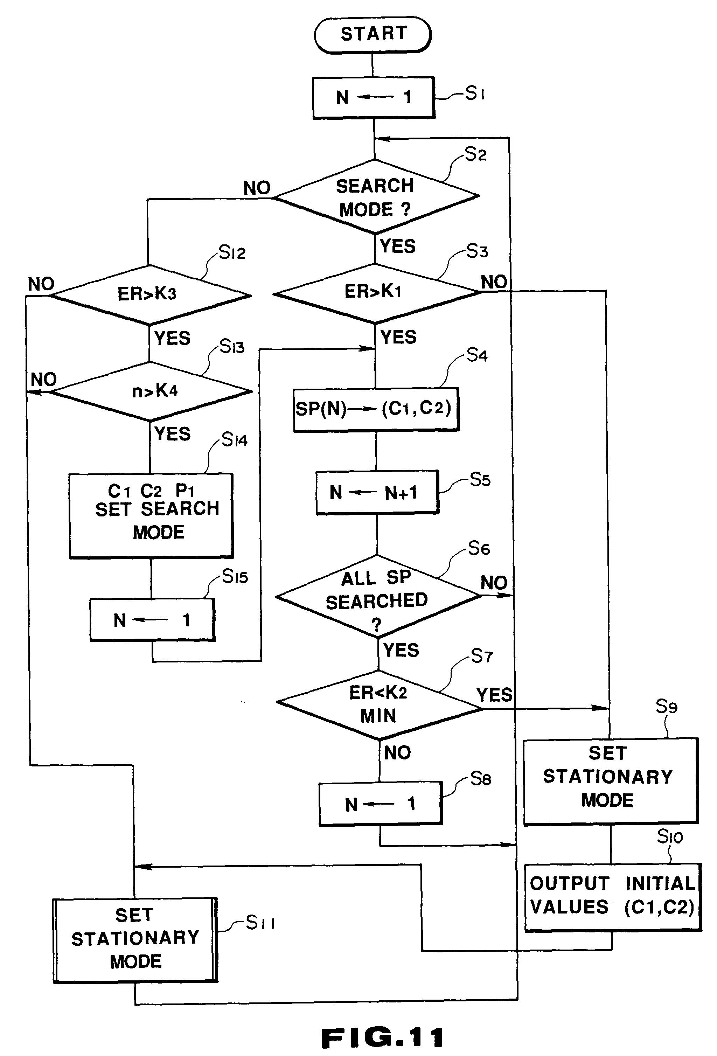

The initial parameter setting unit 40 performs, in a sequence shown in a flow chart of Fig. 11, a setting operation in which, in a two-dimensional plane that can be occupied by first and second characteristic parameters C₁ and C₂ of the equalizer 37, the signal error rates ER of the output of the equalizer 37 are sequentially detected by the error rate detection unit 39 at a necessary minimum number of present measurement points A, B, C, D, E and F thought to be excellent as the initial values of the characteristic parameters C₁ and C₂ as shown in Fig. 10, to find a measurement point of the minimum error rate ER_{MIN} for affording the characteristic parameters C₁, C₂ of the thus found measurement point to the setting unit 38 as the initial parameters.

On starting the operation of the automatic equalizer 34, the initial parameter setting unit 40 sets a variable N which counts the number of the measurement points A, B, C, D, E and F to 1 at first step S₁, and then proceeds to next step S₂.

In this second step S₂, it is determined if the mode is the search mode of setting the initial parameter. If the result is NO, that is, if the mode is not the search mode, the program proceeds to an undermentioned step S₁₂. If the result of decision at step S₁ is YES, that is if the mode is the search mode, the program proceeds to the next third step S₃.

On starting the operation of the automatic equalizer 34, the above mentioned search mode is set, and the program processed from second step S₂ to third step S₃.

In this third step S₃, it is determined if the signal error rate ER of the output of the equalizer 37 currently detected by the error rate detection unit 39 is larger than a predetermined value k₁. If the result of decision at the third step S₃ is NO, that is if the signal error rate ER is smaller than the predetermined value k₁, the program proceeds to the undermentioned step S₉. If the result of decision at the third step S₃ is YES, that is if the signal error rate ER is larger than the predetermined value k₁, the program proceeds to the next fourth step S₄.

In this fourth step S₄, the characteristic parameters C₁ and C₂ at the first measurement point A, indicated by the variable N (N=1), are afforded to the parameter setting section 38, and the signal error rate ER of the output of the equalizer 37 is detected by the error rate detection unit 39.

At the next step S₅, the variable N is incremented, after which the program proceeds to the step S₆.

At the step S₆, it is determined if the signal error rate ER has been detected for all of the measurement points A to F. If the result of decision at the sixth step S₆ is NO, the program reverts to the second step S₂ to repeat the operation from step S₂ to step S₆. In this manner, the signal error rate ER is detected for the measurement points A to F in this order. If the result of decision at the sixth step S₆ is YES, that is if the signal error rate ER has been detected for all of the measurement points ER, the program proceeds to the next seventh step S₇.

At this seventh step S₇, it is determined if the minimum value ER_{MIN} of the signal error rates detected for the measurement points A to F is smaller than the predetermined value k₂. If the result of decision at the seventh step S₇ is NO, that is if the minimum error rate value ER_{MIN} smaller than the predetermined value k₂ cannot be obtained, it is concluded that the detection of the signal error rates ER for the measurement points A to F by the processing operation from second step S₂ to sixth step S₆ has resulted in failure. Thus, at step S₈, the variable N is set to 1 and the program reverts to the second step S₂ to repeat the operation of detecting the signal error rate ER. If the result of decision at the seventh step S₇ is YES, that is if the minimum error rate ER_{MIN} smaller than the predetermined value k₂ is found, the program proceeds to the ninth step S₉.

At this ninth step S₉, a stationary mode is set as the operating mode of the automatic equalizer 34.

At the next step S₁₀, the initial parameters having as the initial values the values of the characteristic parameters C₁ and C₂ for the measurement point for which the minimum error rate ER_{MIN} has been obtained by the search mode operation, for example, the fourth measurement point D shown in Fig. 10, are afforded to the characteristic parameter setting unit 38.

After affording the initial parameters to the characteristic parameter setting unit 38, the initial parameter setting unit 40 initiates the control of the characteristic parameter setting unit 38 by the parameter control unit 41.

If the result of the decision at the above mentioned third step S₃ is NO, that is if the measurement point for which the signal error rate ER becomes smaller than the predetermined value k₁, the initial parameter setting unit 40 proceeds to step S₉ to set the stationary mode. At the tenth step S₁₀, the initial parameters having as the initial values the values of the characteristic parameters C₁ and C₂ at the measurement points for which the signal error rate ER detected by the decision operation at the third step S₃ becomes smaller than the predetermined value k₁, are afforded to the characteristic parameter setting unit 38. In this manner, at a time point when the measurement point has been found for which the signal error rate ER is smaller than the predetermined value k₁, initial parameters having the values of the characteristic parameters C₁ and C₂ for the measurement point as the initial values are set to expedite the operation for the search mode.

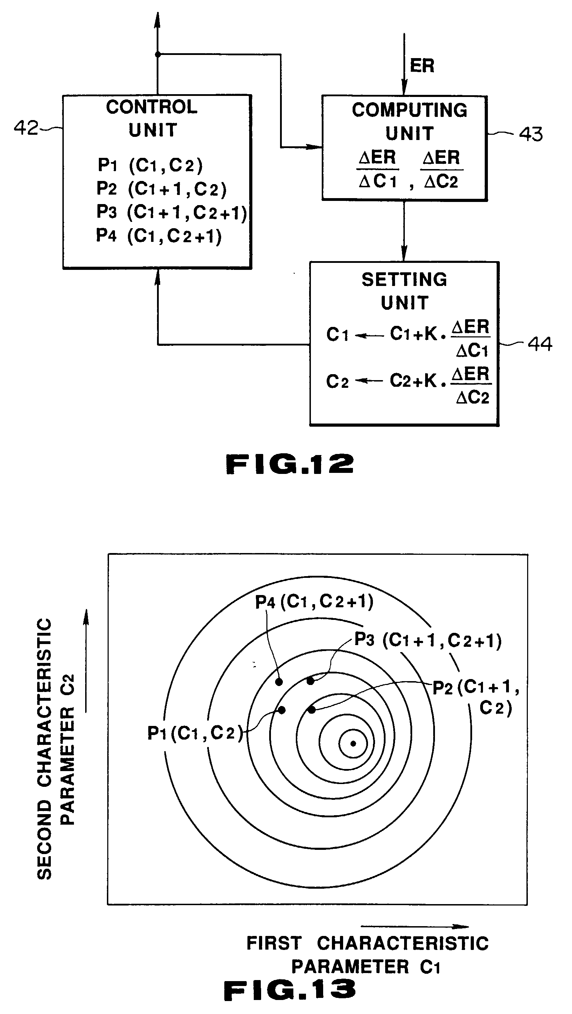

The characteristic parameter control unit 41 performs the stationary mode control operation at the eleventh step S₁₁, and is organized as shown for example in Fig. 12. Thus the characteristic parameter control unit 41 is constituted by a control unit 42 for sequentially changing the characteristic parameters C₁ and C₂ afforded by the parameter setting unit 38 to the equalizer 37 at a predetermined short time interval within a predetermined minute range, a computing unit 43 for computing the degree of change of the signal error rate ER detected by the error rate detection unit 39, and a setting unit 44 for setting the characteristic parameters C₁ and C₂ of the equalizer 37 in the direction of the decreasing error rate ER on the basis of the degree of change of the error rate ER computed by the computing unit 43.

The control unit 42 performs a control operation of minutely orthogonally oscillating the values of the characteristic parameters C₁ and C₂ in the sequence of P₁ (C₁,C₂)→P₂ (C₁+1,C₂)→P₃ (C₁+1,C₂+1)→P₄ (C₁,C₂+1), as shown in Fig. 13, in a two-dimensional plane which can be occupied by the values of the characteristic parameters Cₗ and C₂ afforded by the characteristic parameter setting unit 38 to the equalizer 37.

The computing unit 43 operates on the output from the equalizer 37 for the characteristic parameters of the values P₁ (C₁,C₂), P₂ (C₁+1,C₂), P₃ (C₁+1,C₂+1) and P₄ (C₁,C₂+1) to compute the degree of change ΔER/ΔC₁ of the variance ΔER of the error rate ER with respect to the variance ΔC₁ of the first parameter C₁, in accordance with the equation (5)$\frac{\text{ΔER}}{{\text{ΔC}}_{\text{1}}} \text{=} \frac{{\text{(ER}}_{\text{2}} {\text{+ ER}}_{\text{3}} {\text{) - (ER}}_{\text{4}} {\text{+ ER}}_{\text{1}} \text{)}}{\text{2}}$ while simultaneously computing the degree of change ΔER/ΔC₂ of the variance ΔER of the error rate ER with respect to the variances ΔC₂ of the second characteristic parameter C₂, in accordance with the equation (6)$\frac{\text{ΔER}}{{\text{ΔC}}_{\text{2}}} \text{=} \frac{{\text{(ER}}_{\text{3}} {\text{+ ER}}_{\text{4}} {\text{) - (ER}}_{\text{1}} {\text{+ ER}}_{\text{2}} \text{)}}{\text{2}}$

The data of the degrees of change ΔER/ΔC₁, ΔER/ΔC₂ of the variance ΔER of the error rate ER will respect to the variances ΔC₁, ΔC₂ of the characteristic parameters C₁, C₂, computed by the unit 43, are supplied to the setting unit 44.

On the basis of the ratio data ΔER/ΔC_{1,} ΔER/ΔC₂ of the variance ER of the error rate ER with respect to the variance ΔC₁, ΔC₂ of the above mentioned characteristic parameters C₁ and C₂, the setting unit 44 sets the new values of the characteristic parameters C₁, C₂ in the following manner to diminish the error rate ER.

Thus the setting section 44 sets a new value of the first characteristic parameter C₁ to${\text{C}}_{\text{1}} \text{+ K ·} \frac{\text{ΔER}}{{\text{ΔC}}_{\text{1}}}$ which is the value of the preceding first characteristic parameter C₁ added to by a correction value K·ΔER/ΔC₁. The setting section 44 also sets a new value of the second characteristic parameter C₂ to${\text{C}}_{\text{2}} \text{+ K ·} \frac{\text{ΔER}}{{\text{ΔC}}_{\text{2}}}$ which is the value of the preceding second characteristic parameter C₂ added to by a correction value K·ΔER/ΔC₂. In the above formulae, K stands for a proportionality constant.

The setting operation of the new characteristic parameters C₁ and C₂ by the setting unit 44 need not necessarily be a linear operation, but may also be a nonlinear operation, if the error rate ER may thereby be reduced effectively.

The new characteristic parameters C₁ and C₂, thus set by the setting unit 44, are afforded to the control unit 42, which then repeatedly performs the control operation of minutely orthogonally oscillating these new characteristic parameters C₁ and C₂.

In this manner, the characteristic parameter control unit 41 causes the characteristic parameters C₁ and C₂ of the equalizer 37 to be changed within a predetermined range and, on the bases of the extent of the variance ER of the signal error rate ER detected by the error rate detection unit 39, repeatedly performs an operation of variably controlling the characteristic parameters C₁ and C₂ of the equalizer 37 in the direction of diminishing the error rate ER for automatically controlling the characteristic parameter C₁ and C₂ of the equalizer 37 to the state of the minimum signal error rate ER.

The characteristic parameter control unit 41 performs a control operation for the characteristic parameters C₁ and C₂, using the characteristic parameters C₁ and C₂ for the fourth measurement point D, afforded as the initial parameters by the initial parameter setting unit 40, as the initial values.

In this manner, the characteristic parameters C₁, C₂ can be converged to optimum values promptly and reliably.

In the present embodiment, the program reverts to the above mentioned second step S₂, each time the characteristic parameter control unit 41 performs a control operation for the characteristic parameters C₁, C₂, that is the control operation of the stationary mode of the eleventh step S₁₁, while reverting to the step S₁₂ from the step S₂ during the control operation of the stationary mode, in order to decide if the signal error rate ER obtained by the error detection unit 39 is larger than a predetermined value k₃.

If the result of decision at the twelfth step S₁₂ is NO, that is if the signal error rate ER is lesser than the value k₃, the program reverts to the eleventh step to repeat the stationary mode control operation.

If the result of decision at the twelfth step S₁₂ is YES, that is if the error rate ER is larger than the predetermined value k₃, the program proceeds to the next thirteenth step S₁₃.

In this thirteenth step S₁₃, it is determined if the number of times n the error signal rate ER being larger than the predetermined value k₃ is larger than a predetermined value k₄. If the result of decision at step S₁₃ is NO, the program reverts to the eleventh step S₁₁ to repeat the stationary mode control operation. If the result of decision at the step S₁₃ is YES, that is if the state in which the signal error rate ER is larger than the predetermined value k₃ occurs a predetermined number of times k₄, the program proceeds to the next fourteenth step S₁₄ for setting the measurement point P₀ indicated by the characteristic parameters C₁ and C₂ at this time as the even-numbered-ruple measurement point, while simultaneously setting the search mode.

After setting the variable N to 1 at the next step S₁₅, the program reverts to the above mentioned fourth step S₂ to proceed to the above mentioned search mode.

When the state in which the signal error rate ER is larger than the predetermined value k₃ occurs a predetermined number of times k₄ during the above mentioned ordinary operational mode, and the mode shifts to the above mentioned search mode, the processing operation from the step S₂ to the step S₆ is repeated, and each signal error rate ER is sequentially detected for each of the measurement point P₀ set at the step S₁₄ and the preset measurement points A to F, in the order of A→P₀→B→P₀→C→P₀→D→P₀→E→P₀→F, for performing the above mentioned search operation.

After setting the new initial parameter by the above search operation at the tenth step S₁₀, the program reverts to the eleventh step S₁₁ to reinitiate the above mentioned control operation for the stationary mode.

If the signal error rate ER of the measurement point P₀ is equal to the minimum error rate ER_{MIN} of the measurement points A to F, the characteristic parameters C₁ and C₂ of the measurement point P₀ are preferentially set as the above mentioned initial parameters. The decision values k₁, k₂ and k₃ of the signal error rate ER at the steps S₂, S₇ and S₁₂ are set so that the relation${\text{k}}_{\text{1}} {\text{< k}}_{\text{2}} {\text{< k}}_{\text{3}} {\text{or k}}_{\text{1}} {\text{< k}}_{\text{3}} {\text{< k}}_{\text{2}}$ is satisfied.

With the above described record embodiment of the automatic equalizer according to the present invention, the characteristic parameters of that measurement point among those corresponding to preset plural characteristic parameters which gives the smallest signal error rate, are afforded as the initial parameters by initial parameters setting means to the equalizer having variable characteristic parameters, so that the control operation of converging the characteristic parameters of the equalizer to an optimum value by characteristic parameter control means may be started at a point closer to the above mentioned optimum value. Also, since the initial parameter setting means detects the signal error rate of the equalizer output for each of the measurement points corresponding to the plural characteristic parameters, the initial parameters can be set which will allow the characteristic parameters to be converged efficiently and reliably to an optimum value by the above mentioned parameter control means. In this manner, the characteristic parameters can be converged to optimum values efficiently and reliably by the above characteristic parameter control means. In addition, the initial parameter setting means affords a measurement point not higher than the preset signal error rate to the equalizer as the initial parameter, at the time when such measurement point is found, so that the initial parameter setting operation may be performed expeditiously. Also, when the signal error rate of the equalizer exceeds a preset signal error rate during the characteristic parameter control operation by the parameter control means, the initial parameter setting means performs an operation of setting the initial parameters, using the characteristic parameters in this state as one of the plural measurement points, so that the initial parameter setting operation may be performed expeditiously.

In this manner, there is provided an automatic equalizer in which the characteristic parameters of the equalizer may be converged efficiently and reliably to an optimum values to afford the optimum equalizer characteristics to input signals.

Meanwhile, in a signal reproducing apparatus in which signal reproduction is performed without tracking control, as disclosed in the above mentioned Japanese Patent Application JP-A-59-177712 (1984), each track of the magnetic tape is traced completely only by alternately tracing the track by two magnetic heads so that the track-tracing correlation exhibits a 2-tracing-per-track periodicity. Thus the track-tracing correlation remains constant between every other head-tracing but differs between two consecutive head-tracings.

Thus, when applying the automatic equalizer to the reproducing apparatus, it is necessary to perform the measurement of the effect of the characteristic parameters of the equalizer at the odd-number-ruple tracing and that at the even-number-ruple tracing separately, so that the overall system becomes complex and bulky in size, while its costs, weight and power consumption are necessarily increased.

The present invention contemplates to apply the above mentioned automatic equalizer to the signal reproducing apparatus performing signal reproduction without tracking control to simplify the overall system while reducing its weight, cost and power consumption, and is directed to a signal reproducing apparatus having an automatic equalizing function of efficiently extracting changes in the degree of effect of the characteristic parameters of the equalizer in an odd-number-ruple tracing and an even-number-ruple tracing.

With the signal reproducing apparatus of the present invention, reproduction outputs from the first and second playback rotational magnetic heads are converted into a binary form by a binary unit, and equalizer characteristics are afforded to the binary output from the binary unit by an equalizer having variable characteristic parameters, with the equalized output from the equalizer being then decoded by decoding means into digital signals.

The error detection means detects the signal error rate of the decoded output by the decoding means, that is the digital signal obtained upon decoding by the decoding means.

The characteristic parameter control means repeats a control operation of orthogonally allocating the characteristic parameters of the equalizer in an orthogonal relation which eliminates the effect due to the tracing sequence by the first and second magnetic heads, minutely changing these parameters within a predetermined range and variably adjusting the equalizer parameters in a direction of reducing the signal error rate on the basis of the degree of the change of the signal error rate detected by the error rate detection unit.

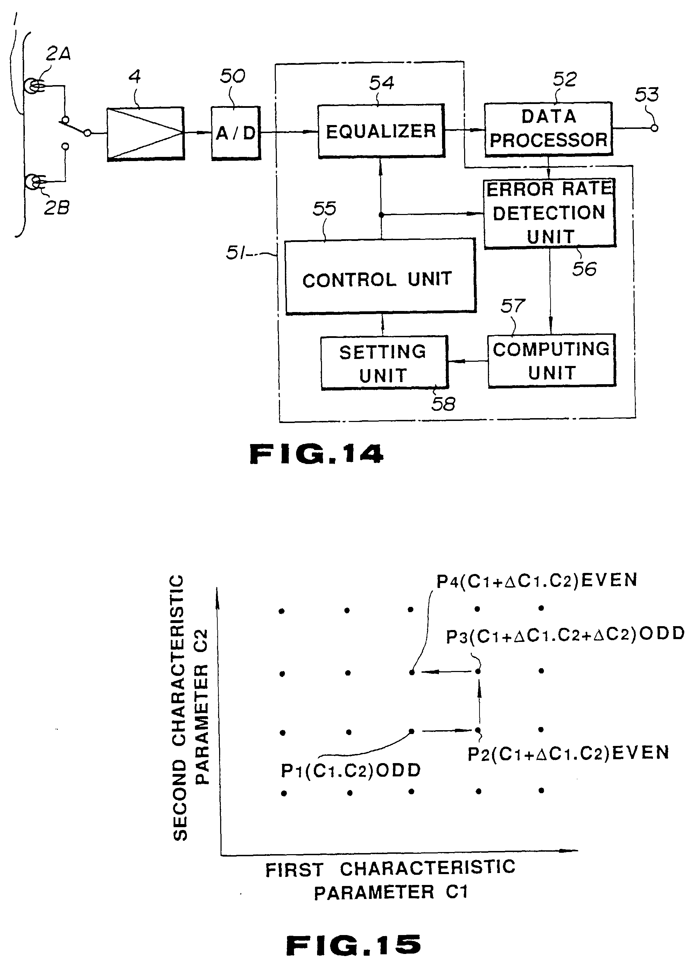

Fig. 14 is a block diagram showing the construction of a reproducing system of a digital audio tape recorder according to another embodiment of the present invention.

The reproducing system, in which the present invention is applied to a reproducing apparatus which performs signal reproduction without tracking control as shown in Figs. 1 to 4, includes a rotational magnetic head device having first and second rotational reproducing magnetic heads 2A, 2B mounted on a tape guide drum 2 at an angular interval of 180° from each other as shown in Fig. 2. Each of the magnetic heads has an azimuth angle corresponding to the recording azimuth of first and second inclined tracks TR_{A}, TR_{B} formed alternately on the magnetic tape 1 shown in Fig. 1. 'Each track of the magnetic tape 1, placed on the tape guide drum 2 over an angle of 180°, is traced completely only by being traced alternately by a plural number of times, such as twice, by the first and second rotational reproducing magnetic heads 2A, 2B.

The playback signals reproduced by the first and second rotational playback magnetic heads 2A, 2B are transmitted, as shown in Fig. 14, from a head changeover switch 3 via a playback amplifier to an analog-to-digital (A/D) converter 50. The A/D converter 50 converts the playback signal into binary signals and thereby into corresponding digital signals. The digital signals from the A/D converter 50 are supplied via an equalizer 54 to a data processor 52 which performs predetermined error correction and decoding operations on the digital signals supplied from the equalizer 54. In this manner, the digital processor 52 decodes the digital audio data from the digital signals to output decoded data as playback audio data at a signal output terminal 53.

In the above described reproducing system, the equalizer 54 constitutes an automatic equalizer 51, and is organized substantially as shown in Fig. 14. The equalizer 54 has its equalizer characteristics varied by three characteristic parameters C₁, C₂ and C₃ afforded from the control unit 55.

On the above described reproducing apparatus, the automatic equalizer 51 is constituted, as shown in Fig. 14, by the above mentioned equalizer 54 having its equalizer characteristics variable by the three characteristic parameters C₁, C₂ and C₃ afforded by the control unit 55, an error rate detection unit 56 for detecting the signal error rate ER of the output of the equalizer 54, a computing unit 57 for computing the extent of change of the signal error rate ER detected by the error rate detection unit 56, and a setting unit 58 for setting the characteristic parameters C₁ and C₂ of the equalizer 54, in a direction of diminishing the signal error rate ER, on the basis of the extent of change of the signal error rate ER computed by unit 57.

Of the parameter C₁, C₂ and C₃ afforded by the control unit 55 to the equalizer 54, the third characteristic parameter C₃ is always fixed at a predetermined value, while the first and second parameters C₁ and C₂ are variably set in the automatic equalizer 51, so that optimum equalizer characteristics are afforded by the equalizer 54.

The control unit 55 performs, in a two-dimensional plane that can be occupied by the characteristic parameters C₁ and C₂ afforded by the equalizer 54, a control operation, as shown in Fig. 15, of producing a minute orthogonal oscillation in the sequence of 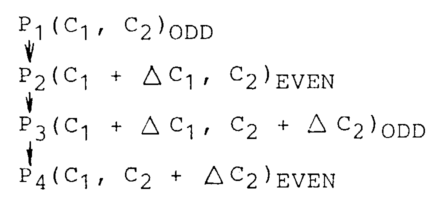 that is, in the sequence in which the values of the characteristic parameters C₁ and C₂ are P₁(C₁,C₂)_{ODD}, P₂(C₁+ ΔC₁,C₂)_{EVEN}, P₃(C₁+ΔC₁,C₂+ ΔC₂)_{ODD} and P₄(C₁,C₂+ΔC₂)_{EVEN} for the first odd-number-ruple tracing, next even-number-ruple tracing, next odd-number-ruple tracing and the next even-number-ruple tracing, respectively.

The computing section 57 operates on the output of the equalizer 54 for the characteristic parameters having the values of P₁(C₁,C₂)_{ODD}, P₂(C₁+ΔC₁,C₂)_{EVEN}, P₃(C₁+ΔC₁,C₂+ ΔC₂)_{ODD}, and P₄(C₁,C₂+ΔC₂)_{EVEN} to compute the change ratio ΔER/ΔC₁ of the variance ER of the error rate ER to the variance ΔC₁ of the first characteristic parameter C₁ from the signal error rates ER₁, ER₂, ER₃ and ER₄ detected by the error rate detection unit 56, in accordance with the equation (7).$\frac{\text{ΔER}}{{\text{ΔC}}_{\text{1}}} \text{=} \frac{{\text{(ER}}_{\text{2}} {\text{+ ER}}_{\text{3}} {\text{) - (ER}}_{\text{4}} {\text{+ ER}}_{\text{1}} \text{)}}{\text{2}}$ while computing the change ratio ΔER/ΔC2 of the variance ER of the error rate ER to the variance ΔC₂ of the second characteristic parameter C₂, in accordance with the equation (8)$\frac{\text{ΔER}}{{\text{ΔC}}_{\text{2}}} \text{=} \frac{{\text{(ER}}_{\text{3}} {\text{+ ER}}_{\text{4}} {\text{) - (ER}}_{\text{1}} {\text{+ ER}}_{\text{2}} \text{)}}{\text{2}}$

In the above described reproducing apparatus, the control unit 55 performs a control operation of allocating the characteristic parameters C₁ and C₂ applied to the equalizer 54, in the sequence not affected by the tracing sequence by the first and second rotational playback magnetic heads 2A, 2B, in an orthogonal relation as shown in Table 1, and minutely changing these parameters in a predetermined range to compute the change ratios ΔER/ΔC₁ and ΔER/ΔC₂ of the variance ΔER of the error rate ER to the variances ΔC₁, ΔC₂ of the characteristic parameters.

**Table 1**

| Orthogonal Allocation for Two-Parameters | | | | |
|---|---|---|---|---|
| | C₁ | C₂ | tracing | signal error rate |
| P₁ | 0 | 0 | ODD | ER₁ |
| P₂ | 1 | 0 | EVEN | ER₂ |
| P₃ | 1 | 1 | ODD | ER₃ |
| P₄ | 0 | 1 | EVEN | ER₄ |

By allocating the cycle of the minute changes of the characteristic parameters C₁ and C₂ in an orthogonal relation as shown in Table 1, it becomes possible to compute at the unit 12 the ratios ΔER/ΔC₁ and ΔER/ΔC₂ of the variance ΔER of the error rate ER to the variances ΔC₁ and ΔC₂ of the parameters C₁ and C₂ by the equations (1) and (2) under the conditions less affected by the even-number-ruple tracing or odd-number-ruple tracing.

It is noted that the ratio ΔER/ΔC₁ and ΔER/ΔC₂ of the variance ΔER to the variances ΔC₁ and ΔC₂ of the characteristic parameters C₁ and C₂ can be computed in accordance with the equations (9) and (10).${\text{ΔER/ΔC}}_{\text{1}} {\text{= ER}}_{\text{2}} {\text{- ER}}_{\text{1}}$${\text{ΔER/ΔC}}_{\text{2}} {\text{= ER}}_{\text{4}} {\text{- ER}}_{\text{1}}$ without necessitating the signal error rate ER₃. However, by computing the rations ΔER/ΔC₁ and ΔER/ΔC₂ as mean values of each two measurements by the equations (1) and (2), using the signal error rates ER₁, ER₂, ER₃ and ER₄, it becomes possible to reduce the effects by the accidental errors as compared to the case of computing the ratios by the equations (9) and (10). Also, by employing the orthogonal allocation shown in Table 1, it becomes possible to offset the effects by the variances ΔC₂ and ΔC₁ when measuring the effect of the variances ΔC₁ and ΔC₂, respectively, so that the effect by the variances ΔC₁, ΔC₂ of the above characteristic parameters C₁ and C₂ can be detected highly accurately.

The data of the ratios ΔER/ΔC₁ and ΔER/ΔC₂ of the variance ΔER of the error rate ER to the variances ΔC₁,ΔC₂ of the parameters C₁, C₂, computed by the computing unit 57, are afforded to the setting unit 58.

On the basis of the ratio data ΔER/ΔC₁, ΔER/ΔC₂ of the variance ΔER of the error rate ER to the variances ΔC₁, ΔC₂ of the above mentioned characteristic parameters C₁ and C₂, the setting unit 58 sets the new values of the characteristic parameters C₁, C₂ in the following manner to diminish the error rate ER.

Thus the setting section 58 sets a new value of the first characteristic parameter C₁ to${\text{C}}_{\text{1}} \text{+ K ·} \frac{\text{ΔER}}{{\text{ΔC}}_{\text{1}}}$ which is the value of the preceding first characteristic parameter C₁ added to by a correction value K·ΔER/ΔC₁. The setting section 58 also sets a new value of the second characteristic parameter C₂ to${\text{C}}_{\text{2}} \text{+ K ·} \frac{\text{ΔER}}{{\text{ΔC}}_{\text{2}}}$ which is the value of the preceding second characteristic parameter C₂ added to by a correction value K·ΔER/ΔC₂. In the above formulae, K stands for a proportionality constant.

The setting operation of the new characteristic parameters C₁ and C₂ by the setting unit 58 need not necessarily be a linear operation, but may also be a nonlinear operation, if the error rate ER may thereby be reduced effectively.

The new characteristic parameters C₁ and C₂, thus set by the setting unit 58, are afforded to the control unit 55, which then repeatedly performs the control operation of minute orthogonal oscillation of these new characteristic parameters C₁ and C₂, as mentioned hereinabove.

In this manner, the control unit 55 causes the characteristic parameters C₁ and C₂ of the equalizer 54 to be changed within a predetermined range and, on the basis of the extent of the variance ΔER of the signal error rate ER detected by the error rate detection unit 56, repeatedly performs an operation of variably controlling the characteristic parameters C₁ and C₂ of the equalizer 37 in the direction of diminishing the error rate ER for automatically controlling the characteristic parameters C₁ and C₂ of the equalizer 54 to the state of the minimum signal error rate ER.

In the above described embodiment, the characteristic parameters C₁ and C₂ of the equalizer 54 are changed to effect a control to optimum values. However, in the reproducing apparatus of the present invention, the number of the characteristic parameters of the equalizer to be changed need not be limited to two as in the present embodiment. For example, when three characteristic parameters C₁, C₂ and C₃ are to be changed, these parameters are allocated in an orthogonal relation as shown in Table 2 to measure the signal error rates ER₁, ER₂, ER₃ and ER₄.

**Table 2**

| Orthogonal Allocation for Three Parameters | | | | |
|---|---|---|---|---|
| | C₁ | C₂ | C₃ | signal error rates |
| P₁ | 0 | 0 | 0 | ER₁ |
| P₂ | 1 | 0 | 1 | ER₂ |
| P₃ | 1 | 1 | 0 | ER₃ |
| P₄ | 0 | 1 | 1 | ER₄ |

Then, the degrees of the effect ΔER/ΔC₁ and ΔER/ΔC₂ by the variances ΔC₁ and ΔC₂ of the characteristic parameters C₁ and C₂ may be computed from the above equations (7) and (8), while the degree of the effect ΔER/ΔC₃ by the variances ΔC₃ of the characteristic parameter C₃ may be computed from an equation (11)$\frac{\text{ΔER}}{{\text{ΔC}}_{\text{3}}} \text{=} \frac{{\text{(ER}}_{\text{2}} {\text{+ ER}}_{\text{4}} {\text{) - (ER}}_{\text{1}} {\text{+ ER}}_{\text{3}} \text{)}}{\text{2}}$

When four to seven characteristic parameters are to be changed, these parameters are allocated in an orthogonal relation, as shown for example in Table 3, to compute the signal error rates ER₁, ER₂, ER₃, ER₄, ER₅, ER₆ and ER₇.

**Table 3**

| Orthogonal Allocation for 4 to 7 Parameters | | | | | | | | |
|---|---|---|---|---|---|---|---|---|
| | Δ C₁ | Δ C₂ | Δ C₃ | Δ C₄ | Δ C₅ | Δ C₆ | Δ C₇ | signal error rate |
| P₁ | 0 | 0 | 0 | 0 | 0 | 0 | 0 | ER₁ |
| P₂ | 0 | 0 | 0 | 1 | 1 | 1 | 1 | ER₂ |
| P₃ | 0 | 1 | 1 | 0 | 0 | 1 | 1 | ER₃ |
| P₄ | 0 | 1 | 1 | 1 | 1 | 0 | 0 | ER₄ |
| P₅ | 1 | 0 | 1 | 0 | 1 | 0 | 1 | ER₅ |
| P₆ | 1 | 0 | 1 | 1 | 0 | 1 | 0 | ER₆ |
| P₇ | 1 | 1 | 0 | 0 | 1 | 1 | 0 | ER₇ |
| P₈ | 1 | 1 | 0 | 1 | 0 | 0 | 1 | ER₈ |

On the basis of the measured results of the signal error rates ER₁, ER₂, ER₃, ER₄, ER₅, ER₆ and ER₇, the degrees of effect ΔER/ΔC₁, ΔER/ΔC₂, ... , ΔER/ΔC₇ by the variances ΔC₁, ΔC₂, ... , ΔC₇ of the characteristic parameters C₁, C₂, ... , C₇ may be computed by the equations (12) to (18):$\frac{\text{ΔER}}{{\text{ΔC}}_{\text{1}}} {\text{= {(ER}}_{\text{5}} {\text{+ ER}}_{\text{6}} {\text{+ ER}}_{\text{7}} {\text{+ ER}}_{\text{8}} \text{)} {\text{- (ER}}_{\text{1}} {\text{+ ER}}_{\text{2}} {\text{+ER}}_{\text{3}} {\text{+ER}}_{\text{4}} \text{)}/8}$$\frac{\text{ΔER}}{{\text{ΔC}}_{\text{2}}} {\text{= {(ER}}_{\text{2}} {\text{+ ER}}_{\text{4}} {\text{+ ER}}_{\text{7}} {\text{+ ER}}_{\text{8}} \text{)} {\text{- (ER}}_{\text{1}} {\text{+ ER}}_{\text{2}} {\text{+ER}}_{\text{5}} {\text{+ER}}_{\text{6}} \text{)}/8}$$\frac{\text{ΔER}}{{\text{ΔC}}_{\text{3}}} {\text{= {(ER}}_{\text{3}} {\text{+ ER}}_{\text{4}} {\text{+ ER}}_{\text{5}} {\text{+ ER}}_{\text{6}} \text{)} {\text{- (ER}}_{\text{1}} {\text{+ ER}}_{\text{2}} {\text{+ER}}_{\text{7}} {\text{+ER}}_{\text{8}} \text{)}/8}$$\frac{\text{ΔER}}{{\text{ΔC}}_{\text{4}}} {\text{= {(ER}}_{\text{2}} {\text{+ ER}}_{\text{4}} {\text{+ ER}}_{\text{6}} {\text{+ ER}}_{\text{8}} \text{)} {\text{- (ER}}_{\text{1}} {\text{+ ER}}_{\text{3}} {\text{+ER}}_{\text{5}} {\text{+ER}}_{\text{7}} \text{)}/8}$$\frac{\text{ΔER}}{{\text{ΔC}}_{\text{5}}} {\text{= {(ER}}_{\text{2}} {\text{+ ER}}_{\text{4}} {\text{+ ER}}_{\text{5}} {\text{+ ER}}_{\text{7}} \text{)} {\text{- (ER}}_{\text{1}} {\text{+ ER}}_{\text{3}} {\text{+ ER}}_{\text{6}} {\text{+ER}}_{\text{8}} \text{)}/8}$$\frac{\text{ΔER}}{{\text{ΔC}}_{\text{6}}} {\text{= {(ER}}_{\text{2}} {\text{+ ER}}_{\text{3}} {\text{+ ER}}_{\text{6}} {\text{+ ER}}_{\text{7}} \text{)} {\text{- (ER}}_{\text{1}} {\text{+ ER}}_{\text{4}} {\text{+ER}}_{\text{5}} {\text{+ER}}_{\text{8}} \text{)}/8}$$\frac{\text{ΔER}}{{\text{ΔC}}_{\text{7}}} {\text{= {(ER}}_{\text{2}} {\text{+ ER}}_{\text{3}} {\text{+ ER}}_{\text{5}} {\text{+ ER}}_{\text{8}} \text{)} {\text{- (ER}}_{\text{1}} {\text{+ ER}}_{\text{4}} {\text{+ER}}_{\text{6}} {\text{+ER}}_{\text{7}} \text{)}/8}$

With the reproducing apparatus of the present invention, as described hereinabove, the characteristic parameter control means repeatedly performs a control operation of allocating the characteristic parameters of the equalizer in an orthogonal relation in a sequence not affected by the tracing sequence by the first and second rotational reproducing magnetic heads, minutely changing these parameters within a predetermined range and variably adjusting the characteristic parameters of the equalizer in the direction of diminishing the signal error rate on the basis of the changing degree of the signal error rate of the equalizer output detected by the error rate detecting means, whereby the change in the effect of the characteristic parameters of the equalizer during odd-number-ruple-tracing and even-number-ruple tracing may be efficiently extracted for efficiently and reliably converging the characteristic parameters to optimum values. The playback output from the first and second reproducing rotational magnetic heads are converted into binary signals, to which equalizer characteristics are afforded by the equalizer, and the equalized output from the equalizer is decoded by decoding means into digital signals, so that reproduced digital signals having a low signal error rate and superior quality may be produced by the decoding means.

Thus the present invention may provide a signal reproducing apparatus, which performs signal reproduction without tracking, with an automatic equalizing function, whereby the changes in the effect of the characteristic parameters of the equalizer during even-number-ruple tracing and odd-number-ruple tracing may be extracted efficiently, so that the overall system may be simplified in structure without increasing the weight, costs or power consumption.

## Claims

1. An automatic equalizer (13; 34; 51) comprising
- an equalizer (16; 37; 54) with variably adjustable parameters (C₁, C₂) which is a FIR type digital filter;
- changing means (17; 42; 55) for changing the parameters of said equalizer (16; 37; 54) within a predetermined range;
- detection means (18; 39; 56) for detecting the error rates of an output of said equalizer;
- extracting means (19; 43; 57) for extracting the degree of change in said error rate; and
- setting means (20; 44; 58) for setting the parameters of said equalizer (16; 37; 54) so as to reduce the error rate on the basis of the degree of change of said error rate extracted by said extracting means (19; 43; 57) and affording new set parameters to said changing means (17; 42; 55);
**characterized in that**
- said changing means (17; 42; 55) is changing said variable equalizer parameters within said predetermined range according to an orthogonal allocation relation of said variably adjustable parameters (C₁, C₂) so that a set of said parameters (C₁, C₂) is sequentially modified in repeating cycles by predetermined small values in dependence upon the output of said changing means (17; 42; 55) in such a manner that a vector in-between the last two sets of parameters ((C₁+1,C₂), (C₁+1,C₂+1)) is orthogonal to the preceding one of those vectors ((C₁, C₂), (C₁+1, C₂)); and in that
- said setting means (20; 44; 58) is a calculation unit for computing new values of said parameters by adding a correction value to each parameter changed by said changing means (17; 42; 55), said correction value being proportional to the degree of change of said error rate with respect to that parameter.

2. An automatic equalizer (34) according to claim 1, wherein
- initial parameter setting means (40) are provided for sequentially detecting, at each of preset plural sets of parameters of said equalizer (A, B, C, D, E, F) thought to be excellent as initial values, the signal error rates (ER) of the equalizer output by said error rate detection means (39) to find the set with the minimum error rate (ERmin) and afford the thus found set to said equalizer as an initial set of parameters.

3. The automatic equalizer according to claim 2, wherein said initial parameter setting means (40) affords a set of parameters of said equalizer with a signal error rate lower than a predetermined value (k₂) to said equalizer (37) as the initial set of parameters at the time point when said set of parameters of said equalizer selected out of said plurality of preset plural sets of parameters of said equalizer is detected.

4. The automatic equalizer according to claim 2, wherein, when the signal error rate of said equalizer (37) exceeds a preset value during a parameter control operation, the initial parameter setting means (40) sets the initial set of parameters by using the set of parameters of said equalizer in this state as one of the preset plural sets of parameters of said equalizer.

5. Use of an automatic equalizer according to anyone of the preceding claims in a signal reproducing apparatus in which each of first and second inclined tracks (T_{A}, T_{B}) formed with different recording azimuths on a recording tape (1) are traced alternatively by first and second reproducing rotational magnetic heads (2A, 2B) having azimuth angles corresponding to the recording azimuths of the recorded signals and comprising A/D converting means (12) for converting the reproduction output from said first and second reproducing rotational magnetic heads into binary signals supplied to an equalizer with variably adjustable parameters having the features of at least one of the preceding claims and further comprising decoding means (14, 15; 35; 52) for decoding the equalized output supplied via said equalizer.

## Patentansprüche

1. Automatischer Entzerrer (13; 34; 51), mit:
einem aus einem FIR Digitalfilter bestehenden Entzerrer (16; 37; 54) mit variabel einstellbaren Parametern (C1, C2);
einer Änderungseinheit (17; 42; 55) zur Veränderung der Parameter des Entzerrers (16; 37; 54) innerhalb eines bestimmten Bereichs;
einer Feststellungseinheit (18; 39; 56) zur Feststellung der Fehlerraten eines Ausgangssignals des Entzerrers;
einem Extrahierer (19; 43; 57), der den Änderungsgrad der Fehlerrate extrahiert; und
einer Setzeinheit (20; 44; 58), die die Parameter des Entzerrers (16; 37; 54) so setzt, daß die Fehlerrate auf Grundlage des von dem Extrahierer (19; 43; 57) extrahierten Änderungsgrads der Fehlerrate reduziert wird, und die die neu gesetzten Parameter an die Änderungseinheit (17; 42; 55) weiterleitet;
**dadurch gekennzeichnet,** daß
die Änderungseinheit (17; 42; 55) die variablen Parameter des Entzerrers innerhalb des bestimmten Bereichs entsprechend einer orthogonalen Zuweisungsbeziehung der variabel einstellbaren Parameter (C₁, C₂) so ändert, daß ein Parametersatz (C₁, C₂) aufeinanderfolgend abhängig von dem Ausgangssignal der Änderungseinheit (17; 42; 55) in wiederholten Zyklen durch bestimmten kleine Werte so modifiziert wird, daß ein Vektor zwischen den beiden letzten Parametersätzen ((C₁+1, C₂), (C₁+1, C₂+1) senkrecht auf dem vorhergehenden dieser Vektoren ((C₁, C₂), (C₁+1, C₂)) steht; und daß
die Setzeinheit (20; 44; 58) eine Berechnungseinheit ist, die zur Berechnung neuer Parameterwerte einen Korrekturwert zu jedem der durch die Änderungseinheit (17; 42; 55) geänderten Parameter addiert, wobei der Korrekturwert proportional zum Änderungsgrad der Fehlerrate in Bezug auf diesen Parameter ist.

2. Automatischer Entzerrer (34) nach Anspruch 1, **gekennzeichnet durch** eine Anfangsparameter-Setzeinheit (40) zur aufeinanderfolgenden Feststellung der Signalfehlerraten (ER) des Ausgangssignals des Entzerrers bei jedem einer Mehrzahl von hervorragend als Anfangswerte geeigneten vorbestimmten Parametersätzen (A, B, C, D, E, F) des Entzerrers durch die Fehlerraten-Feststellungseinheit (39), um den Satz mit der minimalen Fehlerrate (ERmin) zu finden und den gerade gefundenen Satz als Anfangsparameter an den Entzerrer weiterzuleiten.

3. Automatischer Entzerrer nach Anspruch 2, **dadurch gekennzeichnet,** daß die Anfangsparameter-Setzeinheit (40) einen Satz von Parametern des Entzerrers mit einer Signalfehlerrate, die geringer als ein bestimmter Wert (k2) ist, zu dem Zeitpunkt als Anfangsparameter an den Entzerrer (37) weiterleitet, an dem dieser Parametersatz des Entzerrers aus der Mehrzahl vorbestimmter Parametersätze des Entzerrers festgestellt wurde.

4. Automatischer Entzerrer nach Anspruch 2, **dadurch gekennzeichnet,** daß der Satz Anfangsparameter von der Anfangsparameter-Setzeinheit (40) während einer Parameterüberprüfung bei einem Ansteigen der Signalfehlerrate des Entzerrers (37) über einen bestimmten Wert gesetzt wird, indem der Parametersatz des Entzerrers in diesem Zustand als einer der vorbestimmten Parametersätze des Entzerrers verwendet wird.

5. Verwendung eines automatischen Entzerrers nach einem der vorhergehenden Ansprüche in einer Signalwiedergabevorrichtung, in der eine erste und eine zweite geneigte Spur (TA, TB), die mit unterschiedlichen Aufnahmeazumuten auf einem Aufzeichnungsband (1) gebildet sind, alternativ durch einen ersten und einen zweiten Wiedergabe-Drehmagnetkopf (2A, 2B) mit zu den Aufnahmeazimuten der Aufzeichnungssignale korrespondierenden Azimutwinkeln abgetastet werden, der einen A/D Wandler (12), der die Wiedergabeausgangssignale des ersten und des zweiten Wiedergabe-Drehmagnetkopfs in binäre Signale wandelt, die an einen Entzerrer mit Parametern angelegt werden, der die Merkmale wenigstens eines der vorhergehenden Ansprüche aufweist, und einen Dekodierer (14, 15; 35; 52) enthält, der das über den Entzerrer ausgegebene entzerrte Ausgangssignal dekodiert.

## Revendications

1. Egaliseur automatique (13 ; 34 ; 51) comprenant :
un égaliseur (16; 37; 54) muni de paramètres réglables de façon variable (C₁, C₂) qui est un filtre numérique de type FIR ;
un moyen de modification (17; 42; 55) pour modifier les paramètres dudit égaliseur (16 ; 37 ; 54) dans une plage prédéterminée ;
un moyen de détection (18; 39; 56) pour détecter les taux d'erreur d'une sortie dudit égaliseur ;
un moyen d'extraction (19; 43 ; 57) pour extraire le degré de variation dudit taux d'erreur ; et
un moyen d'établissement (20 ; 44; 58) pour établir les paramètres dudit égaliseur (16; 37; 54) de manière à réduire le taux d'erreur sur la base dudit degré de variation dudit taux d'erreur extrait par ledit moyen d'extraction (19; 43; 57) et pour appliquer de nouveaux paramètres d'établissement sur ledit moyen de modification (17 ; 42 ; 55),
caractérisé en ce que :
ledit moyen de modification (17; 42 ; 55) est en train de modifier ledit paramètre d'égaliseur variable dans ladite plage prédéterminée conformément à une relation d'allocation orthogonale desdits paramètres réglables de façon variable (C₁, C₂) de telle sorte qu'un jeu desdits paramètres (C₁, C₂) soit modifié séquentiellement lors de cycles se répétant de faibles valeurs prédéterminées en fonction de la sortie dudit moyen de modification (17; 42 ; 55) de telle sorte qu'un vecteur entre les deux derniers jeux de paramètres ((C₁+1, C₂), (C₁+1, C₂+1)) soit orthogonal à l'un précédent de ces vecteurs ((C₁, C₂), (C₁+1, C₂)) ; et en ce que,
ledit moyen d'établissement (20 ; 44; 58) est une unité de calcul pour calculer de nouvelles valeurs desdits paramètres en ajoutant une valeur de correction à chaque paramètre modifié par ledit moyen de modification (17 ; 42 ; 55), ladite valeur de correction étant proportionnelle au degré de variation dudit taux d'erreur par rapport à ce paramètre.

2. Egaliseur automatique (34) selon la revendication 1, dans lequel :
un moyen d'établissement de paramètre initial (40) est prévu pour détecter séquentiellement, pour chacun de plusieurs jeux préétablis de paramètres dudit égaliseur (A, B, C, D, E, F) considérés comme étant excellents en tant que valeurs initiales, les taux d'erreur de signal (ER) de la sortie d'égaliseur à l'aide dudit moyen de détection de taux d'erreur (39) pour trouver le jeu présentant le taux d'erreur minimum (ERmin) et pour appliquer le jeu ainsi trouvé sur ledit égaliseur en tant que jeu initial de paramètres.

3. Egaliseur automatique selon la revendication 2, dans lequel ledit moyen d'établissement de paramètre initial (40) applique un jeu de paramètres dudit égaliseur avec un taux d'erreur de signal inférieur à une valeur prédéterminée (k₂) sur ledit égaliseur (37) en tant que jeu initial de paramètres au point temporel où ledit jeu de paramètres dudit égaliseur sélectionné parmi ladite pluralité de plusieurs jeux préétablis de paramètres dudit égaliseur est détecté.

4. Egaliseur automatique selon la revendication 2, dans lequel, lorsque le taux d'erreur de signal dudit égaliseur (37) excède une valeur préétablie pendant une opération de commande de paramètre, le moyen d'établissement de paramètre initial (40) établit le jeu initial de paramètres en utilisant le jeu de paramètres dudit égaliseur dans cet état en tant que l'un des plusieurs jeux préétablis de paramètres dudit égaliseur.

5. Utilisation d'un égaliseur automatique selon l'une quelconque des revendications précédentes dans un appareil de reproduction de signal où chacune des première et seconde pistes inclinées (T_{A}, T_{B}) formées selon des azimuts d'enregistrement différents sur une piste d'enregistrement (1) est suivie en alternance par des première et seconde têtes magnétiques tournantes de reproduction (2A, 2B) présentant des angles d'azimut correspondant aux azimuts d'enregistrement des signaux enregistrés et comprenant un moyen de conversion A-N (12) pour convertir la sortie de reproduction provenant desdites première et seconde têtes magnétiques tournantes de reproduction selon des signaux binaires appliqués sur un égaliseur avec des paramètres réglables de façon variable présentant les caractéristiques d'au moins l'une des revendications précédentes et comprenant en outre un moyen de décodage (14, 15 ; 35 ; 52) pour décoder la sortie égalisée appliquée via ledit égaliseur.
